(19) Europäisches Patentamt
European Patent Office
Office européen des brevets

(11) **EP 1 938 667 B1**

(12) **EUROPÄISCHE PATENTSCHRIFT**

(45) Veröffentlichungstag und Bekanntmachung des Hinweises auf die Patenterteilung:
**30.11.2011   Patentblatt 2011/48**

(51) Int Cl.:
***H05B 33/08*** (2006.01)

(21) Anmeldenummer: **06807218.0**

(22) Anmeldetag: **12.10.2006**

(86) Internationale Anmeldenummer:
**PCT/EP2006/067353**

(87) Internationale Veröffentlichungsnummer:
**WO 2007/045601 (26.04.2007 Gazette 2007/17)**

(54) **LICHTQUELLE, DIE MISCHFARBIGES LICHT AUSSENDET, UND VERFAHREN ZUR STEUERUNG DES FARBORTES EINER SOLCHEN LICHTQUELLE**

LIGHT SOURCE EMITTING MULTI-COLOURED LIGHT AND METHOD FOR CONTROLLING THE COLOUR LOCATION OF SUCH A LIGHT SOURCE

SOURCE DE LUMIERE QUI EMET DE LA LUMIERE A MELANGE DE COULEURS, ET PROCEDE POUR COMMANDER LA LOCALISATION CHROMATIQUE D'UNE TELLE SOURCE DE LUMIERE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.10.2005   DE 102005049579**

(43) Veröffentlichungstag der Anmeldung:
**02.07.2008   Patentblatt 2008/27**

(73) Patentinhaber: **Osram AG**
**81543 München (DE)**

(72) Erfinder:
• **HUBER, Andreas**
**82216 Maisach (DE)**
• **NIEDERMEIER, Peter**
**80995 München (DE)**
• **SCHALLMOSER, Oskar**
**85521 Ottobrunn (DE)**

(56) Entgegenhaltungen:
WO-A2-02/052902        US-A1- 2002 047 624
US-A1- 2002 097 000    US-A1- 2004 036 418
US-B1- 6 392 358

**Beschreibung**

Die Erfindung betrifft ein Verfahren zur Steuerung deren Farbortes sowie eine Beleuchtungseinrichtung zur Hinterleuchtung eines Displays mit einer Lichtquelle, die mischfarbiges Licht aussendet.

In der Schrift US 2003/0066945A1 ist ein Verfahren nach dem Präambel von Anspruch 1 offenbart.

Der Farbort von Lichtquellen, die mischfarbiges Licht unterschiedlicher Farben von primären Lichtquellen, etwa Leuchtdioden, aussenden, unterliegt häufig Schwankungen, beispielsweise aufgrund von Alterungsprozessen der primären Lichtquellen oder äußeren Einflüssen, wie Temperaturschwankungen. Für einige Anwendungen, beispielsweise zur Hinterleuchtung von Displays, ist es jedoch wünschenswert, dass der Farbort der Lichtquelle im Wesentlichen konstant bleibt, unabhängig von Änderungen des Lichtes der primären Lichtquellen.

Eine Aufgabe der Erfindung ist es, ein Verfahren zur Steuerung des Farbortes einer Lichtquelle anzugeben, die mischfarbiges Licht aussendet.

Diese Aufgaben werden durch ein Verfahren mit den Schritten des Patentanspruchs 1

Vorteilhafte Ausführungsformen und Weiterbildungen der Lichtquelle und des Verfahrens sind jeweils in den abhängigen Ansprüchen angegeben.

Bei einer Lichtquelle, die mischfarbiges Licht aussendet, das Licht mindestens zwei verschiedener Farben enthält, das von einer Mehrzahl primärer Lichtquellen ausgesendet wird, sind die primären Lichtquellen in Gruppen eingeteilt, wobei die Helligkeitswerte der primären Lichtquellen innerhalb einer Gruppe nach Farben getrennt ermittelt und gesteuert werden, so dass der Farbort des mischfarbigen Lichtes in einem vorgegeben Bereich der CIE-Normfarbtafel liegt.

Die Einteilung der primären Lichtquellen in Gruppen kann hierbei entweder so erfolgen, dass eine Gruppe nur primäre Lichtquellen einer einzigen Farbe umfasst oder alternativ, dass eine Gruppe primäre Lichtquellen unterschiedlicher Farben umfasst.

Bevorzugt sind die primären Lichtquellen einer Gruppe jeweils zueinander so selektiert, dass sich die Helligkeitswerte ihres Lichtes innerhalb eines vorgegeben Bereiches befinden. Da die primären Lichtquellen in Gruppen eingeteilt sind, deren Helligkeiten innerhalb eines vorgegebenen Bereiches liegen, müssen zur Steuerung des Farbortes des mischfarbigen Lichtes nur die primären Lichtquellen innerhalb einer Gruppe ermittelt und gesteuert werden. Gegenüber der Steuerung jeder einzelnen primären Lichtquelle kann so der Aufwand zur Steuerung verringert werden. Gegenüber der Möglichkeit nur zueinander selektierte primäre Lichtquellen zu verwenden, bietet der Einsatz von Gruppen zueinander selektierter primärer Lichtquellen den Vorteil, dass jeweils eine geringere Anzahl an primären Lichtquellen zueinander selektiert sein muss, wodurch vorteilhafterweise die Kosten gesenkt werden können. Letzteres wirkt sich insbesondere bei Lichtquellen mit einer großen Anzahl an primären Lichtquellen positiv aus.

Besonders bevorzugt befinden sich die Helligkeitswerte des Lichtes der primären Lichtquellen einer Gruppe in einem der folgenden Bereiche, wobei die Grenzen jeweils eingeschlossen sind: zwischen 24000 mlm und 28000 mlm, zwischen 28000 mlm und 33000 mlm, zwischen 33000 mlm und 39000 mlm, zwischen 39000 mlm und 45000 mlm, zwischen 45000 mlm und 52000 mlm, zwischen 52000 mlm und 61000 mlm, zwischen 61000 mlm und 71000 mlm.

Bevorzugt umfasst der vorgegebene Bereich der Helligkeitswerte einer Gruppe von seinem Minimum zu seinem Maximum 4000 mlm, 5000 mlm, 6000 mlm, 7000 mlm, 8000 mlm, 9000 mlm oder 10000 mlm.

Bei einer bevorzugten Ausführungsform sind die primären Lichtquellen einer Farbe innerhalb einer Gruppe weiterhin zueinander so selektiert, dass die Dominantwellenlängen ihres Lichtes ebenfalls innerhalb eines vorgegebenen Bereiches liegen. Bevorzugt umfasst der vorgegebene Bereich für die Dominantwellenlängen von seinem Minimum zu seinem Maximum 4 nm, 5nm oder 10 nm.

Als Dominantwellenlänge der primären Lichtquelle wird im Rahmen der vorliegenden Anmeldung die Wellenlänge monochromatischer Strahlung verstanden, die denselben Farbeindruck beim menschlichen Auge hervorruft, wie das Licht der primären Lichtquelle.

Alternativ oder zusätzlich zur Selektion nach Dominantwellenlängen können die primären Lichtquellen einer Gruppe auch nach Peakwellenlängen selektiert sein, so dass die Peakwellenlängen der primären Lichtquellen innerhalb einer Gruppe innerhalb eines vorgegeben Bereiches liegen.

Die Verwendung von primären Lichtquellen mit selektierter Dominantwellenlänge und/oder selektierter Peakwellenlänge innerhalb einer Gruppe trägt weiterhin vorteilhafterweise dazu bei, den Farbort des mischfarbigen Lichtes einfach steuern zu können.

Bei einer bevorzugten Ausführungsform sendet die Lichtquelle mischfarbiges Licht aus, das rotes, grünes und blaues Licht umfasst. Da diese drei Farben einen großen Bereich innerhalb der CIE-Normfarbtafel aufspannen, kann durch Variation der Helligkeiten dieser Farben der Farbort des mischfarbigen Lichtes in einem breiten Bereich eingestellt werden.

Bei dieser Ausführungsform liegen die Dominantwellenlängen der primären Lichtquellen einer Gruppe, die das rote Licht aussenden, bevorzugt innerhalb einer er folgenden Bereiche, wobei die Grenzen jeweils eingeschlossen sind: zwischen 612 nm und 615 nm, zwischen 616 nm und 620 nm, zwischen 620 nm und 624 nm. Die Dominantwellenlängen der primären Lichtquelle einer Gruppe, die das grüne Licht aussenden, liegen weiterhin bei dieser Ausführungsform bevorzugt innerhalb einem der folgenden Bereiche, wobei wiederum die Grenzen eingeschlossen sind: zwischen 519 nm und 525 nm, zwischen 525 nm und 531 nm, zwischen 531 nm und 537 nm. Die Dominantwellenlängen der primären Lichtquellen, die das blaue Licht aussenden, liegen weiterhin bei dieser Ausführungsform bevorzugt innerhalb einem der folgenden Bereiche, wobei wiederum die Grenzen eingeschlossen sind: zwischen 449 nm und 453 nm, zwischen 453 nm und 457 nm, zwischen 457 nm und 461 nm, zwischen 464 nm und 468 nm, zwischen 468 nm und 472 nm, zwischen 472 nm und 476 nm.

Besonders bevorzugt liegt der vorgegebene Bereich des Farbortes des mischfarbigen Lichtes im weißen Bereich der CIE-Normfarbtafel. Zum einen ist weißes Licht, insbesondere Licht das dem Sonnenlicht ähnelt, für viele Anwendungen erforderlich. Zum anderen ist das menschliche Auge bei weißem Licht besonders sensitiv auf Farbänderungen, was besonders häufig eine Steuerung des Farbortes erforderlich macht.

Bevorzugt weist die Lichtquelle Halbleiterleuchtdioden (LEDs), organische Leuchtdioden (OLEDs), Laser, insbesondere Halbleiterlaser oder Elektrolumineszenzfolien als primäre Lichtquellen auf.

Diese primären Lichtquellen besitzen den Vorteil, dass deren Helligkeit im Vergleich zu anderen Lichtquellen, wie beispielsweise Glühlampen, mit geringer Zeitverzögerung durch Variation des elektrischen Signals, mit dem diese angesteuert werden, geändert werden kann. Weiterhin eignen sie sich mit Vorteil für die Ansteuerung mit pulsweiten modulierten Signalen.

Bei einem pulsweitenmodulierten Signal (PWM-Signal) handelt es sich um ein elektrisches Signal, vorzugsweise ein Rechtecksignal, das innerhalb einer festen Grundperiode T für eine bestimmte Zeit $t_{ein}$ angeschaltet und für die restliche Dauer der Grundperiode $t_{aus}$ ausgeschaltet ist. Das Verhältnis aus Einschaltzeit und Grundperiode $t_{ein}/T$ = $t_{ein}/(t_{ein} + t_{aus})$ bezeichnet man als Tastverhältnis dc. Das Tastverhältnis ist ein Maß für den prozentualen zeitlichen Anteil, während dem das PWM-Signal innerhalb der Grundperiode T angeschaltet ist.

Zur Ansteuerung der primären Lichtquellen einer Farbe innerhalb einer Gruppe wird bevorzugt jeweils ein modifiziertes PWM-Signal verwendet, das eine modifizierte Grundperiode mit einem ersten Zeitintervall $t_1$ zusätzlich zu den Zeitintervallen $t_{ein}$ und $t_{aux}$ aufweist, wobei $t_1$ durchaus von einem der Zeitintervalle $t_{ein}$ oder $t_{aus}$ enthalten sein kann oder mit einem dieser Zeitintervalle überlappt. Weiterhin weisen die Grundperioden der modifizierten PWM-Signale zur Ansteuerung der primären Lichtquellen einer Farbe innerhalb einer Gruppe eine feste Phasenbeziehung zueinander.auf, besonders bevorzugt beträgt der Wert der Phase zwischen den modifizierten Grundperioden Null. Das Zeitintervall $t_1$ befindet sich weiterhin bevorzugt zu Beginn der modifizierten Grundperiode. Weiterhin kann das Zeitintervall $t_1$ als Messzeitraum zur Ermittlung von Helligkeitswerten des Lichtes der einzelnen Farben oder des Hintergrundes vorgesehen sein. Zur Ermittlung des Helligkeitswertes des Lichtes einer Farbe innerhalb einer Gruppe wird das Zeitintervall $t_{ein}$ des entsprechenden modifizierten PWM-Signals so phasenverschoben, das es gleichzeitig mit dem Zeitintervall $t_1$ beginnt, während die Zeitintervalle $t_{ein}$ der modifizierten PWM-Signale zur Ansteuerung der primären Lichtquellen von Farben einer Gruppe, deren Helligkeitswerte nicht ermittelt werden sollen außerhalb des Zeitintervalls $t_{ein}$ liegen. So kann innerhalb des Zeitintervalls $t_{ein}$ die Helligkeit der primären Lichtquellen einer Farbe innerhalb einer Gruppe ermittelt werden. Insbesondere kann hierzu vorteilhafterweise ein Sensor verwendet werden, der nicht nach Farben unterscheidet, wie beispielsweise eine Fotodiode.

In der Erfindung findet die Phasenverschiebung des Zeitintervalls $t_{ein}$ in das Zeitintervall $t_1$ nicht sprunghaft zwischen zwei direkt aufeinander folgenden modifizierten Grundperioden statt, sondernd langsam, so dass erst nach Ablauf mehrerer modifizierter Grundperioden der Beginn des Zeitintervalls $t_{ein}$ deckungsgleich mit dem Beginn des Zeitintervalls $t_1$ ist.

Weiterhin wird die die Phasenverschiebung des Zeitintervalls $t_{ein}$ in das Zeitintervall $t_1$ bevorzugt bei einem konstanten Tastverhältnis durchgeführt, da dann vorteilhafterweise keine Änderung des Farbortes des mischfarbigen Lichtes auf Grund einer Änderung des Tastverhältnisses stattfindet.

Die modifizierten PWM-Signale erlauben es, die Helligkeitswerte der primären Lichtquellen einer Farbe innerhalb einer Gruppe sequenziell, dass heißt in, nicht notwendigerweise direkt, nacheinander abfolgenden modifizierten Grundperioden während des Zeitintervalls $t_1$ zu ermitteln. Hierzu folgen die oben beschriebenen modifizierten PWM-Signale zur Ansteuerung der primären Lichtquellen unterschiedlicher Farben aufeinander.

Im Folgenden wird eine Abfolge unterschiedlicher modifizierter Grundperioden als Gesamtperiode des PWM-Signals bezeichnet, die die modifizierten Grundperioden der PWM-Signale zur Ansteuerung der primären Lichtquellen einer Gruppe derart zusammenfassen, dass sich die Gesamtperiode gleichförmig periodisch wiederholt.

Ebenfalls bevorzugt umfasst die Gesamtperiode des PWM-Signals ein Zeitintervall, in dem keine primäre Lichtquelle einer Gruppe angeschaltet ist. Innerhalb dieses Zeitintervalls kann der Helligkeitswert des Hintergrundes ermittelt werden. Bevorzugt wird hierzu ebenfalls das Zeitintervall $t_1$ verwendet, wobei keines der Zeitintervalle $t_{ein}$ in das Zeitintervall $t_1$ phasenverschoben ist.

Werden die Werte der Hintergrundhelligkeit ermittelt, so können die Helligkeitswerte der primären Lichtquellen vorteilhafterweise um die Hintergrundhelligkeit korrigiert werden, so dass Störungen beispielsweise durch Umgebungslicht oder Bauteileoffset zumindest teilweise ausgeglichen werden können. Die Korrektur der Helligkeitswerte um die Hintergrundhelligkeit kann beispielsweise durch Subtraktion des Helligkeitswertes des Hintergrundes von den Helligkeitswerten des Lichtes der primären Lichtquellen einer Farbe innerhalb einer Gruppe erfolgen.

Bei einer Ausführungsform sind die modifizierten PWM-Signale zur Ansteuerung der primären Lichtquellen der Lichtquelle so ausgestaltet, dass immer nur jeweils die primären Lichtquellen einer Farbe einer einzigen Gruppe angeschaltet sind.

Bei einer weiteren bevorzugten Ausführungsform werden die Helligkeitswerte mit einem Sensor ermittelt, dessen Empfindlichkeit an die Empfindlichkeit des menschlichen Auges angepasst ist.

Bei einer Ausführungsform umfasst die Lichtquelle Kommunikationselemente, die dazu geeignet sind, zwischen den einzelnen Gruppen Information auszutauschen, wie beispielsweise das Signal des Sensors. Weiterhin können die Kommunikationselemente dazu verwendet werden, die Reihenfolge festzulegen, in der die Helligkeitswerte verschiedener Gruppen ermittelt werden.

Die Lichtquelle ist insbesondere geeignet für eine Beleuchtungseinrichtung zur Hinterleuchtung eines Displays, beispielsweise eines LCD-Displays verwendet zu werden.

Bei einer bevorzugten Ausführungsform der Beleuchtungseinrichtung für ein Display ist die zur Grundperiode T der modifizierten PWM-Signale korrespondierende Frequenz 1/T mit der Zeilenfrequenz oder einem Vielfachen der Zeilenfrequenz synchronisiert.

Weitere Vorteile und vorteilhafte Ausführungsformen der Erfindung ergeben sich aus den im Folgenden in Verbindung mit den Figuren 1A, 1B, 2 bis 3 und 4A bis 4C näher erläuterten Ausführungsbeispielen.

Es zeigen:

Figur 1A, eine schematische Draufsicht auf eine Lichtquelle gemäß einem Ausführungsbeispiel,

Figur 1B, eine schematische Draufsicht auf ein Modul mit primären Lichtquellen gemäß einem Ausführungsbeispiel,

Figur 2, eine schematische Schnittdarstellung durch eine Beleuchtungseinrichtung gemäß einem Ausführungsbeispiel,

Figur 3, eine schematische Darstellung eines Blockschaltbildes zur Steuerung einer Lichtquelle gemäß einem Ausführungsbeispiel,

Figur 4A, eine schematische Darstellung einer modifizierten Grundperiode elektrischer PWM-Signale gemäß einem Ausführungsbeispiel,

Figur 4B, weitere schematische Darstellungen einer modifizierten Grundperiode elektrischer PWM-Signale zur Steuerung der Lichtquelle gemäß eines Ausführungsbeispiels, und

Figur 4C, eine Abfolge von Grundperioden elektrischer PWM-Signale zur Steuerung der Lichtquelle gemäß einem Ausführungsbeispiel.

In den Ausführungsbeispielen und Figuren sind gleiche oder gleich wirkende Bestandteile jeweils mit den gleichen Bezugszeichen versehen. Die dargestellten Elemente der Figuren sind grundsätzlich nicht als maßstabsgerecht anzusehen. Vielmehr können sie zum besseren Verständnis beispielsweise teilweise übertrieben groß dargestellt sein.

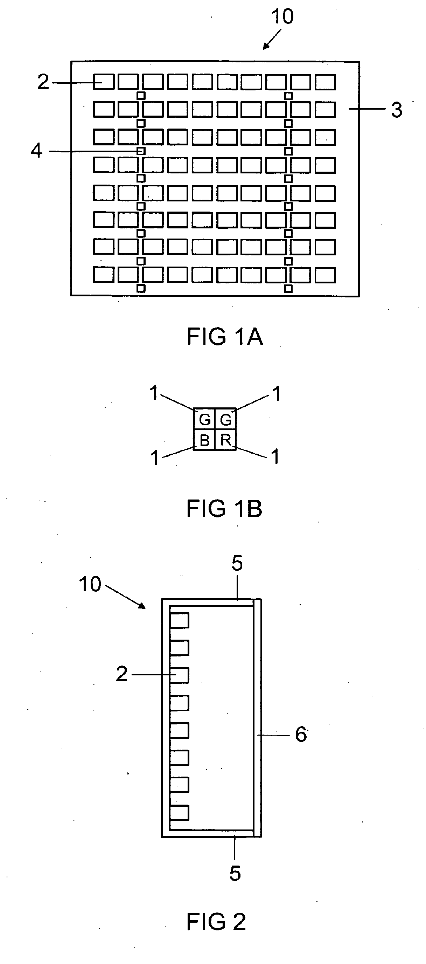

Bei der Lichtquelle 10 gemäß dem Ausführungsbeispiel der Figur 1A sind als primäre Lichtquellen eine Mehrzahl von Halbleiterleuchtdioden 1 (LEDs) verwendet, die Licht verschiedener Farben aussenden. Vorliegend sind beispielsweise jeweils zwei LEDs 1, die grünes Licht aussenden (im Folgenden kurz "grüne LED" G genannt), eine LED, die blaues Licht aussendet (im Folgenden kurz "blaue LED" B genannt) und eine LED, die rotes Licht aussendet (im Folgenden kurz "rote LED" R genannt), in einem Modul 2 zusammengefasst. Eine schematische Draufsicht auf ein solches Modul 2 ist in Figur 1B gezeigt. Bei dem Ausführungsbeispiel gemäß der Figur 1A sind jeweils zehn dieser Module 2 äquidistant in einer Reihe angeordnet, wobei die LEDs 1 einer Reihe eine Gruppe bilden. Das bedeutet, dass die LEDs 1 einer Reihe gemäß ihrer Helligkeit selektiert sind, so dass ihre Helligkeitswerte innerhalb eines vorgegebenen Bereiches liegen. Weiterhin können die LEDs 1 einer Gruppe und einer Farbe R, G, B jeweils auch gemäß ihrer Dominantwellenlänge selektiert sein, das heißt, dass die Dominantwellenlängen der grünen LEDs G einer Gruppe, die Dominantwellenlängen der roten LEDs R einer Gruppe und die Dominantwellenlängen der blauen LEDs B einer Gruppe, innerhalb eines vorgegebenen Bereichs liegen.

Die Lichtquelle 10 gemäß der Figur 1A weist mehrere Reihen von Modulen 2 auf, die untereinander angeordnet und auf einem Träger 3 montiert sind. Zwischen den Reihen der Module 2 befindet sich jeweils zwischen dem zweiten und dritten Modul 2 zu Beginn und Ende jeder Reihe ein Sensor 4, beispielsweise eine Fotodiode, die die Helligkeitswerte der primären Lichtquellen innerhalb der Gruppe sowie die Hintergrundhelligkeit detektieren. Alternativ zu Fotodioden können auch Sensoren verwendet werden, deren Empfindlichkeit an die Empfindlichkeit des menschlichen Auges angepasst ist.

Figur 2 zeigt eine schematische Schnittdarstellung durch eine Beleuchtungseinrichtung, die eine Lichtquelle 10, wie sie beispielsweise in Figur 1A dargestellt ist, umfasst. Weiterhin umfasst die Beleuchtungseinrichtung Seitenwände 5 sowie eine Licht streuende Platte 6, beispielsweise eine Milchglasscheibe oder eine diffus streuende Kunststoffplatte, die die Vorderseite der Beleuchtungseinrichtung bildet, von der das mischfarbige Licht der Beleuchtungseinrichtung ausgesendet wird.

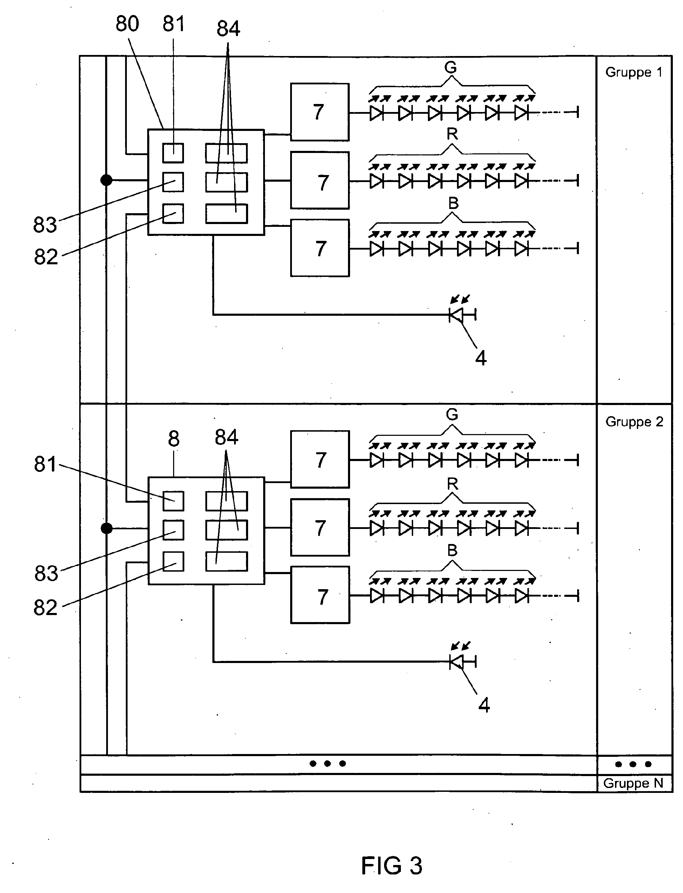

Die Lichtquelle 10 gemäß Figur 1A kann beispielsweise mit Hilfe einer Schaltung angesteuert werden, deren Blockschaltbild schematisch in Figur 3 gezeigt ist. Das Blockschaltbild zeigt exemplarisch die Schaltung zweier Gruppen Gruppe 1 und Gruppe 2, die äquivalent für eine größere Anzahl N an Gruppen erweitert werden kann. Die LEDs 1 einer Gruppe, die Licht einer Farbe aussenden sind jeweils in Reihe geschaltet. Vorliegend sind die roten LEDs R einer Gruppe, die grünen LEDs G einer Gruppe und die blauen LEDs einer Gruppe B in Reihe geschaltet. Jeweils eine Reihenschaltung von LEDs einer Farbe werden von einer Konstantstromquelle (linear oder getaktet) 7 mit Strom versorgt. Weiterhin umfasst die Schaltung gemäß dem Blockschaltbild der Figur 3 je Gruppe einen Kontrollbaustein 8, der zwei Untereinheiten zur Kommunikation 81, 82 mit dem Kontrollbaustein 8 einer anderen Gruppe, eine Untereinheit zur internen Synchronisierung 83 und für jede Farbe des mischfarbigen Lichtes eine, vorliegend also drei, Untereinheiten zur Erzeugung von PWM-Signalen 84 umfasst. Weiterhin weist der Kontrollbaustein 8 einen Eingang für das Signal des Sensors 4 auf.

Jede Konstantstromquelle 7 wird mit einer Untereinheit zur Erzeugung von PWM-Signalen 84 angesteuert, während jeweils eine Untereinheit einer Gruppe zur internen Kommunikation 81 mit einer Untereinheit zur internen Kommunikation einer anderen Gruppe 82 verbunden ist. Weiterhin sind die Untereinheiten zur internen Synchronisierung 83 der beiden dargestellten Gruppen miteinander verbunden.

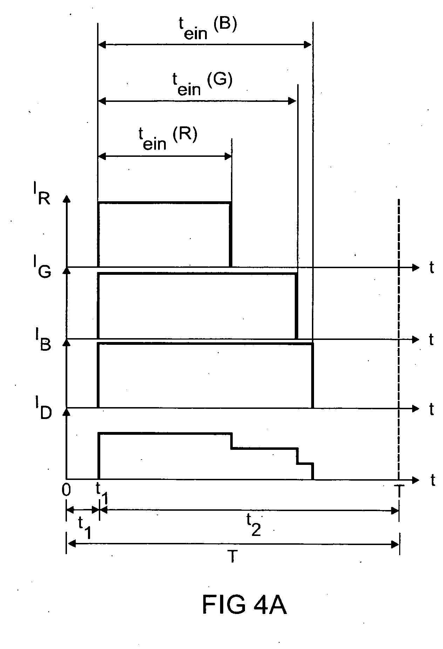

Figur 4A zeigt schematisch jeweils eine Grundperiode $T$ von modifizierten PWM-Signalen $I_R$, $I_G$, $I_B$ zur Ansteuerung der roten, grünen und blauen LEDs R, G, B einer Gruppe, sowie das Signal des Sensors $I_D$ während dieser Grundperiode $T$. Die Grundperiode $T$ eines modifizierten PWM-Signals $I_R$, $I_G$, $I_B$ teilt sich in ein Zeitintervall $t_1$ und einen Zeitintervall $t_2$ auf. Das Zeitintervalls $t_1$ ist dafür vorgesehen, Messungen mit dem Sensor 4 durchzuführen, bzw. diesen auszulesen. Das Zeitintervall $t_2$ repräsentiert den Zeitraum, innerhalb dessen die LEDs einer Farbe R, G, B pro Gruppe angeschaltet sein können, während das Zeitintervall $t_{ein}$ die tatsächliche Dauer angibt, die diese angeschaltet sind. Die Grundperioden der drei modifizierten PWM-Signale zur Ansteuerung der roten, grünen und blauen LEDs R, G, B gemäß Figur 4A weisen keine Phasenverschiebung zueinander auf. Weiterhin ist innerhalb des Zeitintervalls $t_1$ keines der PWM-Signale angeschaltet. Das Signal des Sensors $I_D$ während dieses Zeitintervalls ist ein Maß für den Helligkeitswert des Hintergrundes.

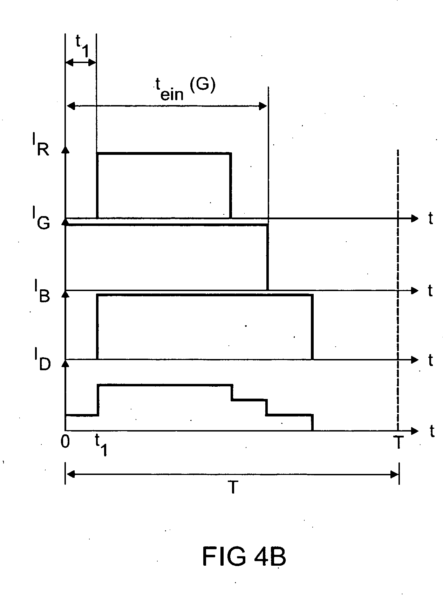

In Figur 4B ist ebenfalls jeweils eine Grundperiode $T$ modifizierter PWM-Signale $I_R$, $I_G$, $I_B$ zur Ansteuerung der roten, grünen und blauen LEDs R, G, B einer Gruppe dargestellt, wobei im Unterschied zur Figur 4A das Zeitintervall $t_{ein}$ des PWM-Signals zur Ansteuerung der grünen LEDs $I_G$ einer Gruppe derart phasenverschoben ist, dass sich der Beginn des Zeitintervalls $t_{ein}$ (G) mit dem Beginn des Zeitintervalls $t_1$ deckt. Daher ist das Signal des Sensors $I_D$ während des Zeitintervalls $t_1$ ein Maß für die Helligkeit der grünen LEDs G dieser Gruppe. Die Phasenverschiebung des Zeitintervalls $t_{ein}$ findet hierbei bevorzugt nicht vollständig zwischen zwei direkt aufeinander folgenden Grundperioden $T$ statt, sondern langsam. Die zur Grundperiode $T$ korrespondierende Frequenz $1/T$ beträgt beispielsweise 260 Hz und die Phasenverschiebung beispielsweise ca. 10°/s.

Wie oben beispielhaft anhand der Figur 4B für das Licht der grünen LEDs G einer Gruppe beschrieben, können auch die Helligkeiten der roten und blauen LEDs R, B einer Gruppe ermittelt werden, indem die Zeitintervalle $t_{ein}$ der jeweiligen PWM-Signale $I_R$, $I_G$, $I_B$ phasenverschoben werden, so dass sich deren Beginn mit dem Beginn des Zeitintervalls $t_1$ deckt.

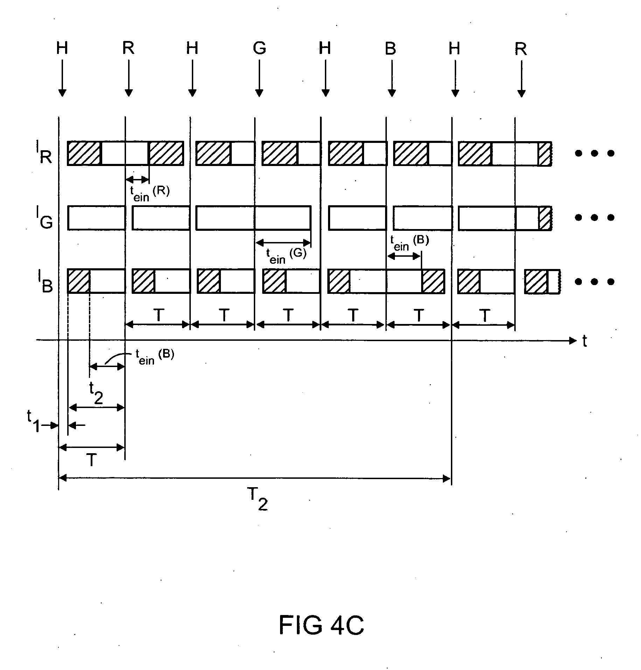

Figur 4C zeigt ein weiteres Ausführungsbeispiel modifizierter PWM-Signale $I_R$, $I_G$, $I_B$ zur Ansteuerung der roten, grünen und blauen LEDs R, G, B einer Gruppe, wobei im Unterschied zu den Figuren 4A und 4B mehrere modifizierte Grundperioden $T$ dargestellt sind, die eine Gesamtperiode $T_2$ bilden. Die Gesamtperiode $T_2$ der modifizierten PWM-Signale $I_R$, $I_G$, $I_B$ in Figur 4C setzt sich aus sechs aufeinander folgenden Grundperioden $T$ zusammen. Während der ersten Grundperiode $T$ ist keines der Zeitintervalle $t_{ein}$ in das Zeitintervall $t_1$ phasenverschoben, so dass die Hintergrundhelligkeit ermittelt werden kann (in dem Diagramm mit H symbolisiert). Bei der zweiten Grundperiode $T$ ist das Zeitintervall $t_{ein}$ (R) des modifizierten PWM-Signals $I_R$ zur Ansteuerung der roten LEDs R einer Gruppe derart phasenverschoben, dass der Beginn des Zeitintervalls $t_{ein}$ (R) deckungsgleich ist mit dem Beginn des Zeitintervalls $t_1$, so dass das Signals des Sensors $I_D$ (in Figur 4C nicht dargestellt) während des Zeitintervalls $t_1$ ein Maß für die Helligkeitswerte der roten LEDs R einer Gruppe ist. Die dritten Grundperiode $T$ ist identisch zur ersten Grundperiode $T$, während bei der vierten Grundperiode $T$ das Zeitintervall $t_{ein}$ (G) des modifizierten PWM-Signals $I_G$ zur Ansteuerung der grünen LEDs G einer Gruppe derart phasenverschoben ist, dass der Beginn des Zeitintervalls $t_{ein}$ (G) deckungsgleich ist mit dem Beginn des Zeitintervalls $t_1$, so, dass das Signals des Sensors $I_D$ während des Zeitintervalls $t_1$ ein Maß für die Helligkeitswerte der grünen LEDs G einer Gruppe ist. Die fünfte Grundperiode $T$ ist wiederum identisch mit der ersten und der dritten Grundperiode T und kann beispielsweise zur Ermittlung der Hintergrundhelligkeit genutzt werden. Bei der sechsten Grundperiode T ist das Zeitintervall $t_{ein}$ (B) des modifizierten PWM-Signals $I_B$ zur Ansteuerung der blauen LEDs B einer Gruppe derart phasenverschoben, dass der Beginn des Zeitintervalls $t_{ein}$ (B) deckungsgleich ist mit dem Beginn des Zeitintervalls $t_1$, so dass das Signals des Sensors $I_D$ während des Zeitintervalls $t_1$ ein Maß für die Helligkeitswerte der blauen LEDs B einer Gruppe ist.

In Figur 4C sind der Einfachheit halber nur die Grundperioden T dargestellt, bei der Helligkeitswerte, entweder des Hintergrundes oder der LEDs R, G, B, ermittelt werden können, so dass die Phasenverschiebung des Zeitintervalls $t_{ein}$ in das Zeitintervall $t_1$ jeweils sprunghaft zwischen zwei direkt aufeinander folgenden Grundperioden T dargestellt ist. Findet die Phasenverschiebung des Zeitintervalls $t_1$ jedoch langsam statt, so befinden sich zwischen zwei der in Figur 4C dargestellten Grundperioden T weitere Grundperioden T, bei denen das jeweilige Zeitintervall $t_{ein}$ in Richtung Zeitintervall $t_1$ verschoben ist.

Die Gesamtperiode $T_2$ besitzt eine Dauer, die sich aus der Dauer der einzelnen Grundperioden T zusammensetzt.

Zur Steuerung des Farbortes des mischfarbigen Lichtes bildet bevorzugt eine Referenztabelle die Berechnungsgrundlage für die Tastverhältnisse der modifizierten PWM-Signale $I_R$, $I_G$, $I_B$ mit denen die roten, die grünen und die blauen LEDs R, G, B einer Gruppe angesteuert werden. Die Referenztabelle enthält die für einen gewünschten Farbort benötigten Helligkeitswerte der verschiedenen Farben, beispielsweise der roten, der grünen und der blauen LEDs R, G, B. Das Tastverhältnis dc für das jeweilige modifizierte PWM-Signal $I_R$, $I_G$, $I_B$ berechnet sich mit dem jeweiligen Tabellenwert nach folgender Formel:

```
dc=Tabellenwert/(Messwert für eine Farbe –

k*Hintergrundhelligkeit),
```

wobei mittels Wahl des Faktor k der Einfluss der Hintergrundhelligkeit auf die Steuerung der Lichtquelle gewichtet werden. Beträgt k null, so liefert der Messwert einer Farbe die Beleuchtungscharakteristik. Weist k einen Betrag größer 1 auf, so kann die Helligkeit der LEDs mit dem Umgebungslicht mitgeführt werden, so dass beispielsweise ein Display mit einer solchen Lichtquelle seine Helligkeit an die der anpasst. Das Vorzeichen des Faktors k bestimmt, ob die Lichtquelle mit hellerem Hintergrundlicht heller oder dunkler wird.

Weiterhin kann mit Hilfe eines vom Tastverhältnis abhängigen Korrekturfaktors die Helligkeit der LEDs 1, angepasst werden, falls diese, beispielsweise auf Grund der im Betrieb entstehenden Wärme, keine konstante Helligkeit aufweisen.

Eine Verminderung oder Erhöhung der Helligkeit der Lichtquelle 10 kann beispielsweise mittels einer linearen Skalierung der Werte der Referenztabelle erfolgen, ggf. anhand der nichtlinearen Charakteristiken der Farbrezeptoren des Auges.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

Insbesondere ist die Erfindung nicht auf die Verwendung von LEDs als primäre Lichtquellen oder auf Lichtquellen, die rotes, grünes und blaues Licht aussenden beschränkt, sondern es können auch andere Lichtquellen als primäre Lichtquellen, sowie primäre Lichtquellen anderer Farben gemäß der Erfindung verwendet werden.

**Patentansprüche**

**1.** verfahren zur Steuerung des Farbortes einer Lichtquelle (10), die mischfarbiges Licht aussendet, das Licht mindestens zwei verschiedener Farben enthält, das von einer Mehrzahl primärer Lichtquellen (1) ausgesendet wird, bei dem:

- die primären Lichtquellen (1) in Gruppen eingeteilt werden, und
- die Helligkeitswerte der primären Lichtquelle (1) innerhalb einer Gruppe nach Farben getrennt ermittelt und gesteuert werden, so dass der Farbort des mischfarbigen Lichtes in einem vorgegeben Bereich der CIE-Normfarbtafel liegt,

wobei die Helligkeit der primären Lichtquellen mittels pulsweiten-modulierten Signalen, eingestellt wird, die innerhalb einer festen Grundperiode (T) für eine bestimmte Einschaltzeit ($t_{ein}$) angeschaltet sind,

wobei eine erste Einschaltzeit der primären Lichtquellen einer ersten Farbe gegenüber den Einschaltzeiten der restlichen Farben so phasenverschoben ist, dass während eines ersten Zeitintervalls (t1) nur die primären Lichtquellen der ersten Farbe angeschaltet sind, wobei
sich in einem zweiten Zeitintervall (t2), das sich an das erste Zeitintervall (t1) abschließt, die Einschaltzeiten aller primären Lichtquellen der Lichtquelle zumindest teilweise überlappen,
**dadurch gekennzeichnet, dass**
die Phasenverschiebung der ersten Einschaltzeit der primären Lichtquellen einer ersten Farbe, verteilt über mehrere Grundperioden stattfindet, bis der Beginn der ersten Einschaltzeit deckungsgleich mit dem Beginn des ersten zeitintervalls (t$_1$) ist.

2.  Verfahren nach Anspruch 1, bei dem die primären Lichtquellen (1) einer Gruppe jeweils zueinander selektiert sind, so dass sich die Helligkeitswerte ihres Lichtes innerhalb eines vorgegeben Bereiches befinden.

3.  Verfahren nach einem der Ansprüche 1 oder 2, bei dem die primären Lichtquellen (1) einer Farbe innerhalb einer Gruppe so zueinander selektiert werden, dass die Dominantwellenlängen ihres Lichtes innerhalb eines vorgegebenen Bereiches liegen.

4.  Verfahren nach einem der obigen Ansprüche, bei dem als primäre Lichtquellen (1) Halbleiter-Leuchtdioden (LEDs), organische Leuchtdioden (OLEDs), Laser oder Elektrolumineszenzfolien verwendet werden.

5.  Verfahren nach einem der obigen Ansprüche, bei dem die Helligkeitswerte mit einem Sensor (4) ermittelt werden, dessen Empfindlichkeit an die Empfindlichkeit des menschlichen Auges angepasst ist.

6.  Verfahren nach einem der obigen Ansprüche, bei dem zur Ermittlung der Helligkeitswerte eine Fotodiode (4) eingesetzt wird.

7.  Verfahren nach einem der obigen Ansprüche, bei dem die Helligkeitswerte der primären Lichtquellen (2) einer Farbe innerhalb einer Gruppe sequenziell mit Hilfe einer Fotodiode (4) ermittelt werden.

8.  Verfahren nach einem der obigen Ansprüche, bei dem die Helligkeitswerte der primären Lichtquellen (2) einer Farbe innerhalb einer Gruppe um die Hintergrundhelligkeit korrigiert werden.

9.  Verfahren nach einem der obigen Ansprüche, bei dem die Lichtquelle (10) mischfarbiges Licht aussendet, das die Farben Rot, Grün und Blau umfasst.

10. Verfahren nach einem der obigen Ansprüche, bei dem das mischfarbige Licht einen Farbort im weißen Bereich der CIE-Normfarbtafel aufweist.


**Claims**

1.  Method for controlling the colour locus of a light source (10) emitting mixed-collared light containing light of at least two different colours which is emitted by a plurality of primary light sources (1) wherein:

    - the primary light sources (1) are divided into groups, and
    - the brightness values of the primary light sources (1) within a group are determined and controlled separately according to colours, such that the colour locus of the mixed-coloured light lies in a predetermined region of the CIE standard chromaticity diagram,
    wherein the brightness of the primary light sources is set by means of pulse-width-modulated signals which are switched on within a fixed basic period (T) for a specific switch-on time (t$_{on}$),
    wherein a first switch-on time of the primary light sources of a first colour is phase-shifted relative to the switch-on times of the remaining colours such that only the primary light sources of the first colour are switched on during a first time interval (t$_1$), wherein
    in a second time interval (t$_2$), which is adjacent to the first time interval (t$_1$), the switch-on times of all the primary light sources of the light source at least partly overlap,
    **characterized in that**
    the phase shift of the first switch-on time of the primary light sources of a first colour takes place, in a manner distributed over a plurality of basic periods, until the beginning of the first switch-on time is congruent with the beginning of the first time interval (t$_1$).

**2.** Method according to Claim 1, wherein the primary light sources (1) of a group are in each case selected with respect to one another such that the brightness values of their light are within a predetermined range.

**3.** Method according to either of Claims 1 and 2, wherein the primary light sources (1) of a colour within a group are selected with respect to one another such that the dominant wavelengths of their light lie within a predetermined range.

**4.** Method according to any of the preceding claims, wherein semiconductor light emitting diodes (LEDs), organic light emitting diodes (OLEDs), lasers or electroluminescent films are used as primary light sources (1).

**5.** Method according to any of the preceding claims, wherein the brightness values are determined by means of a sensor (4), the sensitivity of which is adapted to the sensitivity of the human eye.

**6.** Method according to any of the preceding claims, wherein a photodiode (4) is used for determining the brightness values.

**7.** Method according to any of the preceding claims, wherein the brightness values of the primary light sources (2) of a colour within a group are determined sequentially with the aid of a photodiode (4).

**8.** Method according to any of the preceding claims, wherein the brightness values of the primary light sources (2) of a colour within a group are corrected by the background brightness.

**9.** Method according to any of the preceding claims, wherein the light source (10) emits mixed-coloured light comprising the colours red, green and blue.

**10.** Method according to any of the preceding claims, wherein the mixed-coloured light has a colour locus in the white region of the CIE standard chromaticity diagram.

**Revendications**

**1.** Procédé pour commander la position chromatique d'une source de lumière (10) qui émet de la lumière à mélange de couleurs, la lumière comportant au moins deux couleurs différentes et étant émise par une pluralité de sources de lumière primaires (1), dans lequel :

    - les sources de lumière primaires (1) sont réparties en groupes, et
    - les valeurs de luminosité des sources de lumière primaires (1) à l'intérieur d'un groupe sont déterminées et commandées séparément selon les couleurs de sorte que la position chromatique de la lumière à mélange de couleurs soit comprise dans une zone prédéfinie du tableau normalisé des couleurs de la CIE,
    où la luminosité des sources de lumière primaires est réglée au moyen de signaux modulés en largeur d'impulsion, les sources de lumière étant allumées pendant un temps de fonctionnement déterminé ($t_{ein}$) à l'intérieur d'une période de base fixe (T),
    où un premier temps de fonctionnement des sources de lumière primaires d'une première couleur est déphasé par rapport aux temps de fonctionnement des couleurs restantes de telle sorte que pendant un premier intervalle de temps (t1) seules les sources de lumière primaires de la première couleur sont allumées,
    où pendant un deuxième intervalle de temps (t2) qui suit le premier intervalle de temps (t1), les temps de fonctionnement de toutes les sources de lumière primaires de la source de lumière se chevauchent au moins en partie,
    **caractérisé en ce que**
    le décalage de phase du premier temps de fonctionnement des sources de lumière primaires d'une première couleur se fait de manière étalée sur plusieurs périodes de base jusqu'à ce que le début du premier temps de fonctionnement coïncide avec le début du premier intervalle de temps ($t_1$).

**2.** Procédé selon la revendication 1, dans lequel les sources de lumière primaires (1) d'un groupe sont sélectionnées à chaque fois entre elles de sorte que les valeurs de luminosité de leur lumière soient comprises dans une zone prédéfinie.

**3.** Procédé selon l'une des revendications 1 ou 2, dans lequel les sources de lumière primaires (1) d'une couleur à l'intérieur d'un groupe sont sélectionnées entre elles de telle sorte que les longueurs d'ondes dominantes de leur lumière soient comprises dans une zone prédéfinie.

4. Procédé selon l'une des revendications mentionnées ci-dessus, dans lequel on utilise comme sources de lumière primaires (1) des diodes électroluminescentes à semiconducteurs (LED), des diodes électroluminescentes organiques (OLED), des lasers ou des feuilles électroluminescentes.

5. Procédé selon l'une des revendications mentionnées ci-dessus, dans lequel les valeurs de luminosité sont déterminées avec un capteur (4), dont la sensibilité est adaptée à celle de l'oeil humain.

6. Procédé selon l'une des revendications mentionnées ci-dessus, dans lequel on utilise une photodiode (4) pour déterminer les valeurs de luminosité.

7. Procédé selon l'une des revendications mentionnées ci-dessus, dans lequel les valeurs de luminosité des sources de lumière primaires (2) d'une couleur à l'intérieur d'un groupe sont déterminées de manière séquentielle à l'aide d'une photodiode.

8. Procédé selon l'une des revendications mentionnées ci-dessus, dans lequel les valeurs de luminosité des sources de lumière primaires (2) d'une couleur à l'intérieur d'un groupe sont corrigées de la luminosité d'arrière-plan.

9. Procédé selon l'une des revendications mentionnées ci-dessus, dans lequel la source de lumière (10) émet de la lumière à mélange de couleurs qui comprend les couleurs rouge, vert et bleu.

10. Procédé selon l'une des revendications mentionnées ci-dessus, dans lequel la lumière à mélange de couleurs a une position chromatique dans la zone blanche du tableau normalisé des couleurs de la CIE.

10

FIG 1A

FIG 1B

FIG 2

FIG 3

FIG 4A

FIG 4B

FIG 4C

**EP 1 938 667 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030066945 A1